# EUROPÄISCHE PATENTSCHRIFT

(11) **EP 1 343 378 B1**
(45) Veröffentlichungstag und Bekanntmachung des Hinweises auf die Patenterteilung: **09.02.2005**
(21) Anmeldenummer: 01271899.5
(22) Anmeldetag: 21.12.2001
(51) Int. Cl.: A21B 3/07, A21C 9/08

(54) **BESCHICKUNGSVORRICHTUNG FÜR BACKÖFEN ZUR HERSTELLUNG VON GEBACKENEN FORMKÖRPEN**
FEEDING DEVICE FOR BAKING OVENS FOR PRODUCING BAKED SHAPED UNITS
DISPOSITIF DE CHARGEMENT POUR FOURS DE BOULANGERIE SERVANT A PRODUIRE DES CORPS MOULES CUITS

(30) Priorität: 22.12.2000 AT 21412000
(43) Veröffentlichungstag der Anmeldung: 17.09.2003
(73) Patentinhaber: FRANZ HAAS WAFFEL-UND KEKSANLAGEN-INDUSTRIE GMBH, 1210 Wien (AT)
(72) Erfinder: HAAS, Franz, A-1210 Wien (AT); HAAS, Johann, A-3400 Klosterneuburg (AT); OBERMAIER, Fritz, A-3500 Krems (AT)
(74) Vertreter: Puchberger, Rolf, Dipl. Ing.
(86) Internationale Anmeldenummer: PCT/AT2001/000404
(87) Internationale Veröffentlichungsnummer: WO 2002/051248

(56) Entgegenhaltungen:
- EP-A- 0 879 556
- EP-A- 1 064 847
- DE-A- 1 932 286
- DE-A- 2 238 119
- DE-A- 3 929 443
- DE-B- 1 155 736
- US-A- 4 208 441

## Beschreibung

### Gebiet der Erfindung:

Die Erfindung bezieht sich auf eine Beschickungsvorrichtung nach dem Oberbegriff von Anspruch 1.

### Stand der Technik

Backöfen, bei denen die ihre Backstrecke durchlaufenden Backformen von den umlaufenden oberen und unteren Backplatten des Backofens gebildet werden, welche mit ihren entlang der Backstrecke einander zugewandten Backflächen die Ober- bzw. Unterseiten der in den Backformen gebackenen Formkörper bestimmen, werden in der Waffelbacktechnologie - abhängig von der Konstruktion der Backformen und Backplatten des jeweiligen Backofens - zum Herstellen von knusprigen, spröden und leicht zerbrechlichen Waffeln oder zum Herstellen von weichen, sogenannten Soft-Waffeln, wie z. B. den Belgischen Waffeln, eingesetzt.

Bei diesen Backöfen durchlaufen die unteren Backplatten in einem horizontalen Abschnitt ihrer Umlaufbahn eine der Backstrecke vorgelagerte Eingabestation, an der neben der Bahn der unteren Backplatten eine stationäre Teigaufgießvorrichtung angeordnet ist, die den flüssigen Waffelteig in jeweils auf das Volumen der Backformen abgestimmten Teigportionen auf die vorbeilaufenden, unteren Backplatten aufgießt. Die Teigaufgießvorrichtung befördert den flüssigen Waffelteig mit Hilfe ihrer Teigpumpe aus einem Vorratsbehälter zu ihrem horizontalen Aufgießrohr, das oberhalb der Bahn der unteren Backplatten angeordnet ist und an seiner Unterseite mit Austrittsöffnungen für den flüssigen Waffelteig versehen ist. Die Portionierung des flüssigen Waffelteiges erfolgt im voraus durch die Teigpumpe der Teigaufgießvorrichtung. Es sind auch Teigaufgießvorrichtungen bekannt, bei denen die Portionierung des flüssigen Waffelteiges erst an den Austrittsöffnungen des AufgieBrohres durch dort angebrachte und von außen zu betätigende Ventile erfolgt.

Bei diesen Backöfen fließt jeweils die auf die heiße, nach oben weisende Backfläche einer unteren Backplatte aufgegossene, flüssige Teigportion auf der Backfläche auseinander und breitet sich nach allen Seiten aus. Beim Schließen der Backform wird auf die ausgebreitete, flüssige Teigportion die heiße, nach unten weisende Backfläche einer oberen Backplatte aufgesetzt. Die flüssige Teigportion wird durch den Kontakt mit den beiden heißen Backflächen aufgeschäumt und durch den in ihr entstehenden Wasserdampf bis an die Grenzen des Formhohlraumes der Backform verteilt. Dadurch entsteht ein die Backform ausfüllender, durch den Wasserdampf aufgeschäumter und noch nicht formstabiler Teigkörper, der im Zuge des weiterlaufenden Backprozesses verfestigt wird und am Ende des Backprozesses eine die Backform ausfüllende, formstabile Waffel bildet.

Bei diesen Backöfen werden nur flüssige Teige eingesetzt, bei denen der durch den Kontakt mit den heißen Backplatten entstehende Wasserdampf jeweils das den Teig auflokkemde und gleichzeitig bis an die Grenzen des Formhohlraumes der Backform verteilende Triebmittel ist. Die Teigaufgießvorrichtungen dieser Backöfen sind für ein Beschicken von Backformen mit nicht flüssigen Teigen nicht geeignet.

### Zusammenfassung der Erfindung:

Aufgabe der Erfindung ist es, für die Backöfen, bei denen die Backformen für die Herstellung der gebackenen Formkörper von den mit ihren Backflächen einander zugewandt die Backstrecke des Backofens durchlaufenden, oberen und unteren Backplatten des Backofens gebildet werden, eine Beschickungsvorrichtung für nicht flüssige Teige zu schaffen, die bereits in einzelne Teigstücke vorportioniert sind.

Als Lösung wird eine Beschickungsvorrichtung mit den Merkmalen von Anspruch 1 vorgeschlagen.

Die erfindungsgemäße Beschickungsvorrichtung ist unterhalb der Ausgabestation einer dem Backofen vorgelagerten und diesem die Teigstücke zuführenden Transportvorrichtung angeordnet. Die Beschickungsvorrichtung übernimmt die von der Transportvorrichtung ausgegebenen Teigstücke und setzt sie mit zeitlicher Verzögerung auf den unteren Backplatten an vorgegebenen Stellen ab.

Am Beginn eines Bewegungszyklus der Beschickungsvorrichtung befindet sich die Absetzvorrichtung in ihrer hinteren Endstellung unterhalb der Ausgabestation der Transportvorrichtung. Die Absetzvorrichtung verweilt in ihrer hinteren Endstellung bis sich die Teigstücke von der Transportvorrichtung gelöst haben und auf der Absetzvorrichtung angekommen sind. Anschließend wird die Absetzvorrichtung mit den unteren Backplatten in deren Laufrichtung synchron mitbewegt. Die von der Absetzvorrichtung übernommenen Teigstücke wandern entlang der Absetzvorrichtung an die vorgegebenen Absetzstellen. Dort fallen die Teigstücke aus der Absetzvorrichtung heraus und auf die jeweils darunterliegende Backfläche einer unteren Backplatte. Die Absetzvorrichtung wird mit den unteren Backplatten synchron mitbewegt bis sich alle Teigstücke von ihr gelöst haben und jedes Teigstück an seiner vorgegebenen Absetzstelle auf der Backfläche einer unteren Backplatte angekommen ist. Nach dem Erreichen ihrer vorderen Endstellung wird die jetzt leere Absetzvorrichtung entgegen der Laufrichtung der unteren Backplatten zurück in ihre hintere Endstellung bewegt und der nächsten Bewegungszyklus der Beschickungsvorrichtung beginnt.

Durch die erfindungsgemäße Beschickungsvorrichtung werden die Teigstücke auf den unteren Backplatten in den durch die Absetzvorrichtung vorgegebenen Positionen nebeneinander abgesetzt.

Die Absetzvorrichtung kann für eine einreihige Übergabe der Teigstücke ausgebildet sein und bei jedem Bewegungszyklus der Beschickungsvorrichtung nur eine Reihe von in Querrichtung des Backofens nebeneinander angeordneten Teigstücken übernehmen, die nach dem Durchwandern der Absetzvorrichtung auf der Backfläche einer unteren Backplatte abgesetzt werden.

Die Absetzvorrichtung kann auch für eine zweireihige Übergabe der Teigstücke ausgebildet sein. Bei dieser Ausbildung übernimmt die Absetzvorrichtung bei jedem Bewegungszyklus der Beschickungsvorrichtung zwei in Längsrichtung des Backofens hintereinander angeordnete Reihen von in Querrichtung des Backofens nebeneinander angeordneten Teigstücken. Die Teigstücke der beiden Reihen durchwandern die Absetzvorrichtung und werden auf nur einer unteren Backplatte oder auf zwei in Längsrichtung des Backofens hintereinander angeordneten, unteren Backplatten abgesetzt.

Die Absetzvorrichtung kann auch für eine mehrreihige Übergabe der Teigstücke ausgebildet sein. Bei dieser Ausbildung werden jeweils drei oder mehrere Querreihen von Teigstücken von der Absetzvorrichtung übernommen und auf einer unteren Backplatten oder auf mehreren in Längsrichtung des Backofens hintereinander angeordneten, unteren Backplatten abgesetzt.

Die erfindungsgemäße Beschickungsvorrichtung setzt die Teigstücke jeweils mit Abstand nebeneinander auf der Backfläche einer unteren Backplatte des Backofens ab. Im Backofen wird die zugehörige obere Backplatte beim Schließen der Backform zur unteren Backplatte hin abgesenkt oder nach unten geschwenkt. Dabei werden die nebeneinander liegenden Teigstücke durch die Backfläche der oberen Backplatte flachgedrückt und in dem von den beiden Backflächen begrenzten Formhohlraum seitlich auseinandergedrückt. Aus den flachgedrückten Teigstücken entstehen durch den Backprozeß einzelne, seitlich unregelmäßig begrenzte Formkörper, bei denen die Ober- und Unterseite jeweils dem den betreffenden Formkörper nach oben bzw. nach unten begrenzenden Flächenbereich der Backfläche der oberen Backplatte bzw. der Backfläche der unteren Backplatte entsprechen.

Mit einer erfindungsgemäßen Beschickungsvorrichtung kann auch ein Backofen mit Teigstücken beschickt werden, bei dem die Backflächen der Backplatten jeweils mehrere nebeneinander angeordnete und durch Stege von einander getrennte Formhälften von nebeneinander angeordneten Backformen bilden. Die durch die Absetzvorrichtung vorgegebenen Absetzstellen sind dann jeweils auf die unteren Backformhälften ausgerichtet, sodaß in jeder unteren Backformhälfte das ihr zugeordnete Teigstück auf der unteren Backplatte abgesetzt wird.

Die erfindungsgemäße Beschickungsvorrichtung ermöglicht es, jeweils gleiche oder auch unterschiedliche Teigstücke auf den unteren Backplatten abzusetzen. Die Teigstücke können untereinander jeweils das gleiche Teiggewicht besitzen, aber von verschiedenen Teigen stammen oder auch nur von mit unterschiedlichen Zusätzen (wie Hagelzucker, weiße Schokoladestücke, Bitterschokoladestücke, Fruchtstücke, Rosinen, Nußstücke, Käsestücke etc.) versehenen Teigen stammen. Die Teigstücke können aus einem festen Teig bestehen. Die gleichzeitig auf einer unteren Backplatte abgesetzten Teigstücke können auch unterschiedliche Teiggewichte besitzen.

Die Teigstücke können aus einem knetbaren Hefeteig bestehen, der mit Zuckerstücken versetzt ist, wie er für die Lütticher Waffeln verwendet wird. Der mit Zuckerstücken versetzte Hefeteig wird in Teigstücke mit gleichem Teiggewicht geteilt, die anschließend rasten gelassen werden, damit durch den selbsttätig weitergärenden Hefeteig die einzelnen Teigstücke aufgelockert und in ihrem Volumen vergrößert werden. Zum Rasten werden die Teigstücke in Querreihen auf den umlaufenden Gärgehängen eines Gärschrankes abgelegt. Sie durchlaufen auf den Gärgehängen liegend den klimatisierten Innenraum des Gärschrankes und gehen dabei auf. Die Durchlaufzeit durch den Gärschrank entspricht der für die Teigruhe vorgesehen Rastzeit. Am Ende dieser Rastzeit werden die jeweils aufgegangenen aber geringfügig unterschiedlichen Teigstücke aus dem Gärschrank ausgegeben, an eine erfindungsgemäße Beschickungsvorrichtung übergeben und von dieser auf den unteren Backplatten eines Backofens nebeneinander absetzt. Die abgesetzten Teigstücke werden dann von den oberen Backplatten des Backofens vertikal zusammengedrückt und gleichzeitig horizontal auseinandergedrückt. Dabei entsteht bei jedem einzelnen Teigstück an seiner Oberseite und an seiner Unterseite jeweils das für Lütticher Waffeln typische Waffelmuster.

Gemäß einem weiteren Merkmal der Erfindung kann die Absetzvorrichtung einen in Längsrichtung des Backofens hin und her bewegbaren Schlitten besitzen, der in Querrichtung des Backofens nebeneinander angeordnete Auffangschalen für die Teigstücke trägt, welche mit den Backflächen der unteren Backplatten zugewandten unteren Abgabeöffnungen für die Teigstücke versehen ist.

Diese Ausbildung erleichtert das gleichzeitige Absetzen einer großen Anzahl von Teigstücken auf einer oder mehreren unteren Backplatten des jeweiligen Backofens. Bei der Übernahme der Teigstücke durch die Beschickungsvorrichtung nimmt der Schlitten der Absetzvorrichtung das Gewicht aller auf den Auffangschalen auftreffenden Teigstücke auf und fängt die Auftreffenergie der Teigstücke ab. Anschließend trägt der Schlitten das Gewicht aller Teigstücke, während diese zufolge der auf sie wirkenden Schwerkraft in der jeweiligen Auffangschale zu deren unterer Abgabeöffnung wandern.

Gemäß einem weiteren Merkmal der Erfindung trägt der Schlitten zumindest zwei in Längsrichtung hintereinander angeordnete Querreihen von Auffangschalen.

Diese Ausbildung erlaubt das parallellaufende Absetzen mehrerer Teigstückreihen und verlängert gleichzeitig die Zeitspanne, die jedem einzelnen Teigstück für das Durchwandern der Beschickungsvorrichtung zur Verfügung steht.

Gemäß einem weiteren Merkmal der Erfindung trägt der Schlitten eine Transportvorrichtung für die Auffangschalen, welche Transportvorrichtung eine auf dem Schlitten in Querrichtung umlaufende, endlose Transportkette besitzt, auf der die Auffangschalen befestigt sind.

Die Transportkette kann zumindest zwei in Längsrichtung hintereinander angeordnete Querreihen von Auffangschalen tragen, deren Auffangschalen jeweils an einem in Querrichtung verlaufenden Abschnitt des Transportkette befestigt sind. Der Schlitten kann einen in Querrichtung über die Bahn der unteren Backplatten seitlich vorstehenden Randabschnitt besitzen, der eine an der Umlaufbahn der Transportkette angeordnete, mit einer Reinigungsvorrichtung für die Auffangschalen versehene Reinigungsstation für die Auffangschalen trägt.

Diese Ausbildung ist bei klebrigen Teigstücken von Vorteil, weil die beim Durchwandern der Auffangschalen an deren Oberflächen allenfalls haften bleibenden Teigteilchen in der Reinigungsstation von den Auffangschalen entfernt werden können, bevor noch an der Oberfläche einer Auffangschale eine Ansammlung von Teigteilchen entsteht, die das Entlanggleiten der Teigstücke an der Oberfläche dieser Auffangschale übermäßig behindert.

Die Reinigungsstation kann seitlich neben der Bahn der unteren Backplatten stationär angeordnet sein und eine am Gestell des Backofens angebrachte Reinigungsvorrichtung für die Teigstück-Auffangschalen umfassen. Alternativ kann eine mit dem Schlitten mitbewegbare Reinigungsstation vorgesehen sein, die eine am Schlitten angebrachte Reinigungsvorrichtung für die Teigstück-Auffangschalen umfaßt.

Die Umlaufbahn der Transportkette kann zumindest zwei in Querrichtung des Backofens verlaufende Kettentrume aufweisen, bei denen die an der Transportkette befestigten Teigstück-Auffangschalen jeweils eine in Querrichtung des Backofens verlaufende Reihe bilden.

Diese Ausbildung erlaubt das parallellaufende Absetzen mehrerer Teigstückreihen und verlängert gleichzeitig die für das Durchwandern der Beschickungsvorrichtung den Teigstücken zur Verfügung stehende Zeitspanne.

Jede Teigstück-Auffangschale einen kann trichterförmigen Oberteil und einen ihre Abgabeöffnung umschließenden, hülsenförmigen Unterteil besitzen.

Diese Ausbildung ist bei Teigstücken von Vorteil, die aus einem knetbarem Hefeteig bestehen, aufgegangen sind und daher eine weiche, leicht zusammendrückbare Konsistenz besitzen. Dies Teigstücke ändern ihre Gestalt unter bloßer Schwerkrafteinwirkung sowohl beim Ablösen von der der Beschickungsvorrichtung vorgelagerten Transportvorrichtung als auch beim Auftreffen auf den Auffangschalen der Absetzvorrichtung.

Nachstehend wird die Erfindung anhand der Zeichnungen näher erläutert.

### Kurze Beschreibung der Zeichnungen:

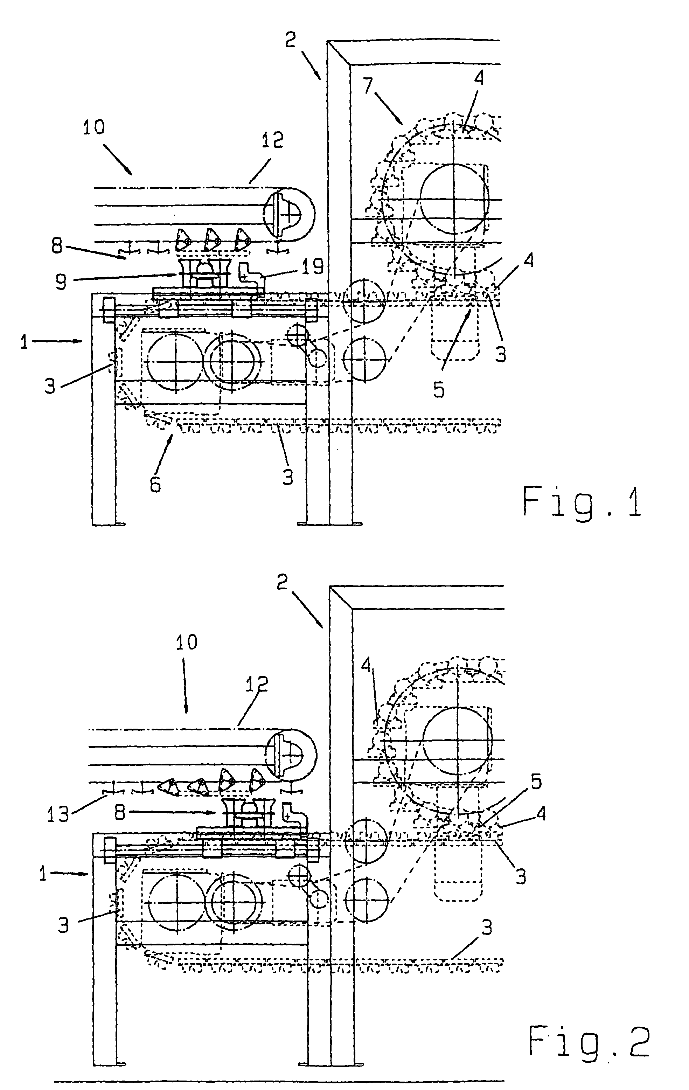

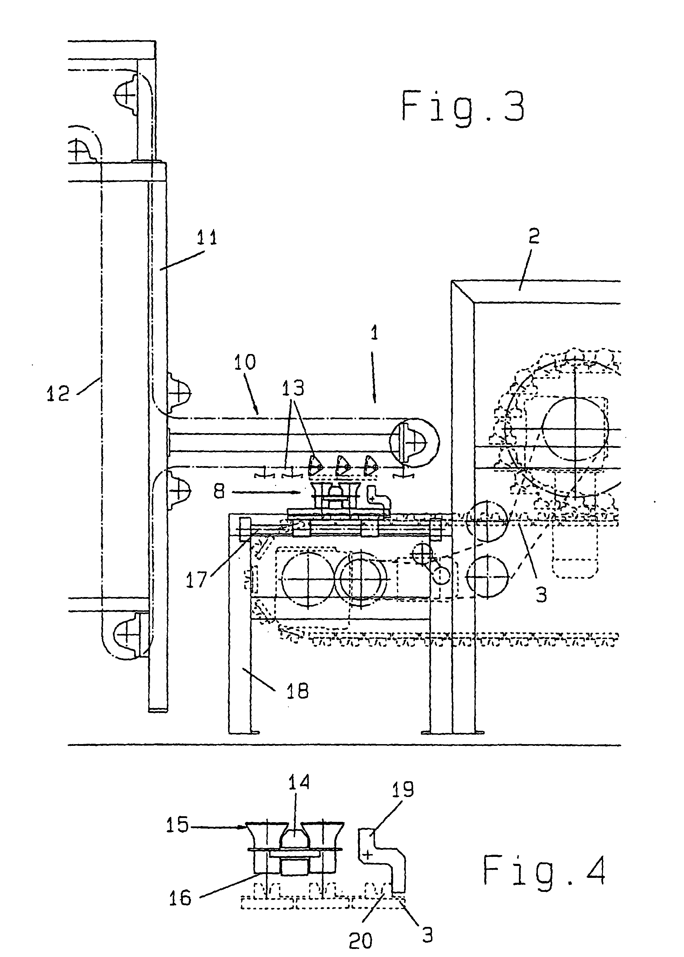

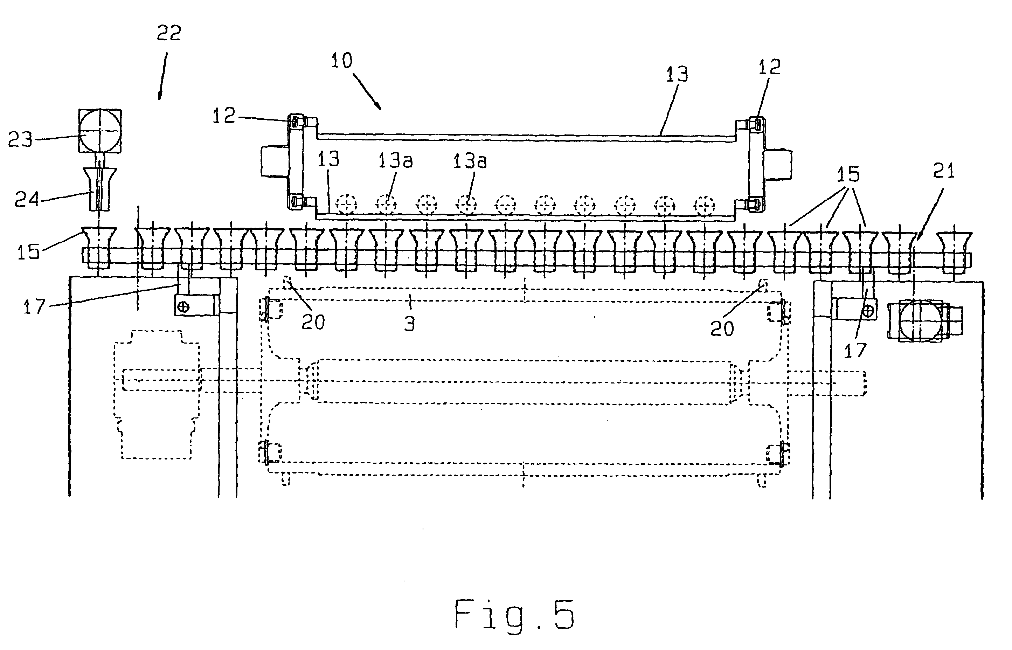

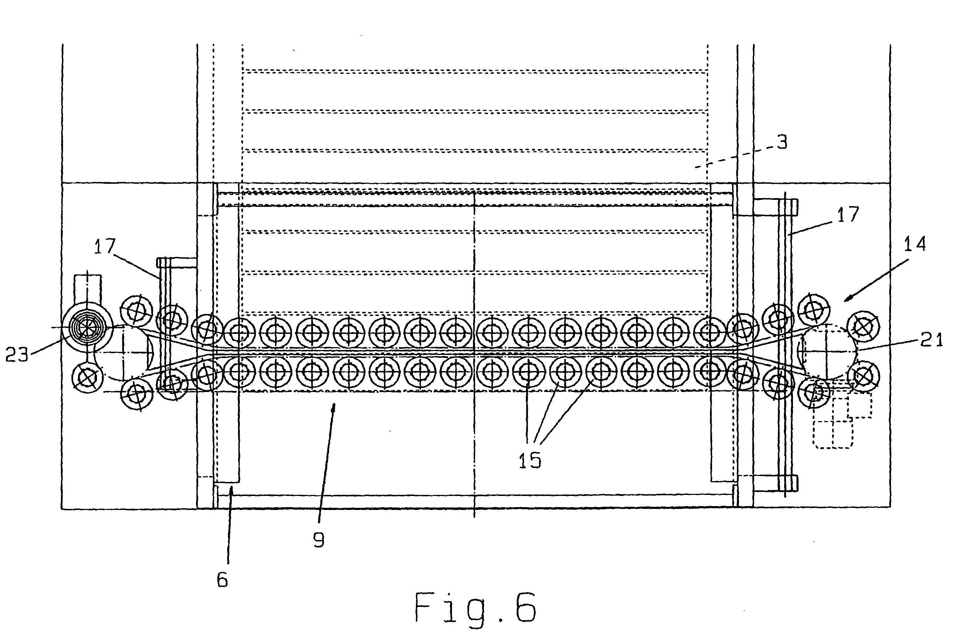

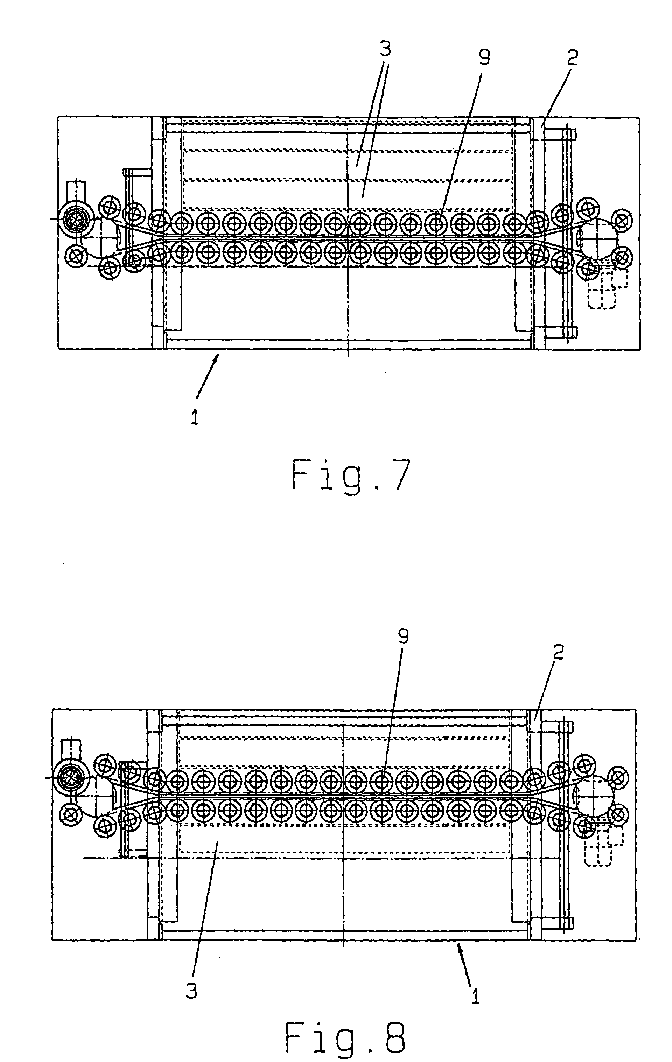

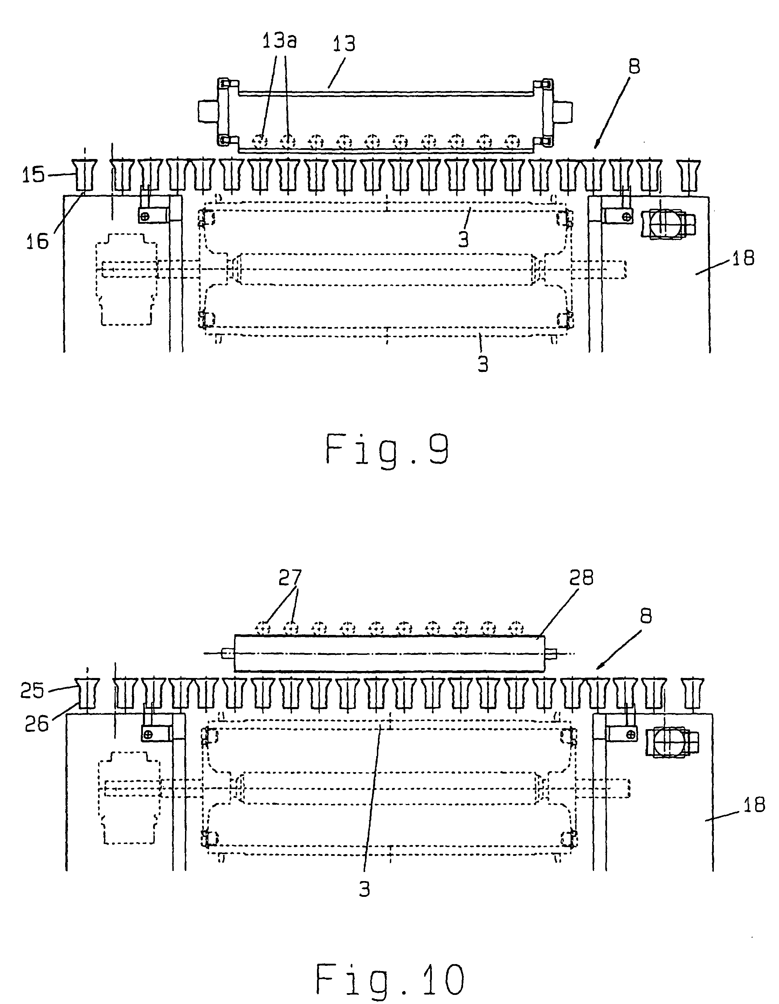

In den Zeichnungen zeigen: Fig. 1 in einer schematischen Seitenansicht die Eingabestation eines Backofens mit einer erfindungsgemäßen Beschickungsvorrichtung am Beginn eines Beschickungszyklus, Fig. 2 die Eingabestation des Backofens der Fig. 1 mit der Beschickungsvorrichtung am Ende eines Beschickungszyklus, Fig. 3 in einer schematischen Seitenansicht eine erfindungsgemäße Beschickungsvorrichtung, die zwischen der Ausgabestation eines Gärschrankes und der Eingabestation eines Backofens angeordnet ist, Fig. 4 ein Detail einer mechanischen Kopplung einer Teigstück-Absetzvorrichtung mit einer umlaufenden Backplattenkette eines Backofens, Fig. 5 in einer schematischen Stirnansicht die Eingabestation eines Backofens mit einer oberhalb seiner unteren Backplatten angeordneten, erfindungsgemäßen Beschickungsvorrichtung, Fig. 6 schematisch die Eingabestation des Backofens der Fig. 5 von oben, Fig. 7 in einer schematischen Draufsicht eine Eingabestation eines Backofens mit einer erfindungsgemäßen Beschickungsvorrichtung mit der Teigstück-Absetzvorrichtung in ihrer hinteren Endstellung, Fig. 8 die Eingabestation der Fig. 7 mit der Teigstück-Absetzvorrichtung in ihrer vorderen Endstellung, Fig. 9 in einer schematischen Stirnansicht die Eingabestation eines Backofens mit einer oberhalb seiner unteren Backplatten angeordneten, erfindungsgemäßen Beschickungsvorrichtung, die unterhalb der Ausgabestation eines Gärschrankes angeordnet ist, und Fig. 10 in einer schematischen Stirnansicht die Eingabestation eines Backofens mit einer oberhalb seiner unteren Backplatten angeordneten, erfindungsgemäßen Beschickungsvorrichtung, die unterhalb des Abgabeendes eines endlosen Transportbandes angeordnet ist, das die in Querreihen hintereinander angeordneten Teigstücke zum Backofen transportiert.

### Beschreibung von Ausführungsbeispielen:

In den Fig. 1-6 ist die Eingabestation 1 eines langgestreckten Backofens 2 zur Herstellung von gebackenen Formkörpern dargestellt. Bei diesem Backofen 2 laufen seine unteren Backplatten 3 und seine oberen Backplatten 4 in getrennten Umlaufbahnen gegensinnig um und durchlaufen seine langgestreckte Backstrecke 5 mit ihren Backfläche einander jeweils zugewandt in gleicher Richtung. Entlang der Backstrecke 5 bilden jeweils zwei übereinanderliegende Backplatten 3, 4 eine Backform. Bei jeder Backform bestimmt die untere Backplatte 3 mit ihrer Backfläche die Unterseiten des in der Backform gebackenen Formkörpers und die obere Backplatte 4 bestimmt mit ihrer Backfläche die Oberseiten des in der Backform gebackenen Formkörpers.

Die unteren Backplatten 3 und die oberen Backplatten 4 werden von getrennten Endlosförderem 6, 7 durch ihre jeweilige Umlaufbahn bewegt. Die Umlaufbahn der unteren Backplatten 3 ist unterhalb der Backstreckenebene angeordnet und beginnt vor der Eingabestation 1. Die Umlaufbahn der oberen Backplatten 4 ist oberhalb der Backstreckenebene angeordnet und beginnt erst nach der Eingabestation 1.

Am Beginn der Backstrecke 5 werden die oberen Backplatten 4 durch den oberen Förderer 7 auf die unteren Backplatten 3 aufgesetzt. Dabei werden die in der Eingabestation 1 auf den unteren Backplatten 3 abgesetzten Teigstücke zusammengedrückt und in der entstehenden Backform zwischen den übereinanderliegenden Backplatten 3, 4 eingeschlossen. Der untere Förderer 6 befördert die Backformen durch die Backstrecke 5.

In der Eingabestation 1 ist oberhalb des oberen horizontalen Abschnittes der Umlaufbahn der unteren Backplatten 3 eine Beschickungsvorrichtung 8 für die Teigstücke angeordnet. Diese Beschickungsvorrichtung 8 umfaßt eine Absetzvorrichtung 9 für die Teigstücke. Diese Absetzvorrichtung 9 ist mit den unteren Backplatten 3 vorübergehend mitbewegbar und setzt die Teigstücke jeweils an vorgegebenen Stellen auf den Backflächen der unteren Backplatten 3 ab.

Oberhalb der Beschickungsvorrichtung 8 ist die Ausgabestation 10 eines Gärschrankes 11 angeordnet. Der Gärschrank 11 besitzt zwei parallel zueinander umlaufende, endlose Transportketten 12, auf denen Kippdielen 13 aufgehängt sind. Auf den Kippdielen 13 liegt jeweils eine vorgegebene Anzahl von Teigstücken in einer Reihe nebeneinander. Diese Teigstücke bestehen jeweils aus einem elastischen, knetbaren Teig, der mit einem Treibmittel versetzt ist. Die Teigstücke verbringen ihre Ruhezeit, während der der Teig rastet und die Teigstücke aufgehen, auf den Kippdielen 13 des Gärschrankes 11. Die umlaufenden Kippdielen 13 kommen am Ende der Ruhezeit an der Ausgabestation 10 des Gärschrankes 11 an. Dort werden jeweils zwei hintereinander angeordnete Kippdielen 13 gleichzeitig gekippt und die auf diesen jeweils in einer Reihe nebeneinander liegenden Teigstücke 13a fallen nach unten aus dem Gärschrank 11 und von oben in die Beschikkungsvorrichtung 8, in der sie auf der Absetzvorrichtung 9 landen.

Die Absetzvorrichtung 9 umfaßt einen oberhalb der unteren Backplatten 3 des Backofens angeordneten, in Längsrichtung des Backofens hin und her bewegbaren Schlitten 14, der in Querrichtung des Backofens nebeneinander angeordnete Auffangschalen 15 für die Teigstücke 13a trägt. Jede Auffangschale 15 ist mit einer unteren Abgabeöffnung 16 versehen, die den Backflächen der unteren Backplatten 3 zugewandt ist.

Der Schlitten 14 sitzt auf in Längsrichtung des Backofens 2 verlaufenden Führungen 17 und ist auf diesen in Längsrichtung des Backofens 2 verschiebbar geführt. Diese Führungen 17 sind im Ofengestell 18 seitlich neben der Bahn der unteren Backplatten 3 angeordnet.

Am Schlitten 14 ist ein schwenkbarer Mitnehmer 19 vorgesehen, der mit an den unteren Backplatten 3 seitlich angebrachten Halteelementen 20 in Eingriff gebracht werden kann, um den Schlitten 14 mit den unteren Backplatten 3 vorübergehend mit zu bewegen. In der hinteren Endstellung des Schlittens 14 wird der Mitnehmer 19 abgesenkt und in Anlage an den Halteelementen 20 gebracht, damit der Schlitten 14 von den unteren Backplatten 3 in deren Laufrichtung mitgenommen wird. In der vordere Endstellung des Schlittens 14 wird der Mitnehmer 19 nach oben verschwenkt und von den Halteelementen 20 der unteren Backplatten 3 abgehoben. Anschließend wird der Schlitten 14 von einem nicht dargestellten Druckluftzylinder entlang den Führungen 17 im Ofengestell 18 zurück in seine hintere Endstellung bewegt.

Auf dem Schlitten 14 ist eine in Querrichtung des Backofens 2 umlaufende, endlose Transportkette 21 montiert, die von einem seitlich neben der Backplattenbahn angeordneten Motor angetrieben wird. Die Auffangschalen 15 sind an dieser Transportkette 21 befestigt. Eine Reinigungsstation 22 für die Auffangschalen 15 ist an der Umlaufbahn der Transportkette 21 seitlich neben der Bahn der unteren Backplatten 3 angeordnet. An der Reinigungsstation 22 ist eine Reinigungsvorrichtung 23 vorgesehen, die die Auffangschalen 15 samt ihren unteren Abgabeöffnungen 16 durch eine vertikal auf und ab bewegbare Reinigungsbürste 24 von anhaftenden Teigresten befreit.

Die Auffangschalen 15 besitzen einen trichterförmigen Oberteil 25, dessen obere Öffnung größer als die aufzufangenden Teigstücke 13a ist. Die Auffangschalen 15 besitzen weiters einen hülsenförmigen Unterteil 26, der ihre untere Abgabeöffnung 16 umschließt.

Die auf den Backflächen der unteren Backplatten 3 abzusetzenden Teigstücke 27 können der erfindungsgemäße Beschickungsvorrichtung 8 auch von einem über ihr endenden Transportband 28 zugeführt werden. (Fig. 10)

Die erfindungsgemäße Beschickungsvorrichtung kann auch bei Backöfen eingesetzt werden, bei denen die oberen und unteren Backplatten in auf und zu klappbaren Backzangen aufgenommen sind, die im Backofen in einer in sich geschlossen Bahn umlaufen und die Eingabestation des Backofens jeweils mit ihrer oberen Backplatte um mehr als 90 Grad aufgeklappt durchlaufen.

## Patentansprüche

1. Beschickungsvorrichtung zum Einbringen von Teig in Backformen, die von oberen und unteren Backplatten gebildet werden, die in einem Backofen in dessen Längsrichtung umlaufen, wobei die beiden Backplatten einer Backform mit ihren einander zugewandten Backflächen die Ober- und Unterseiten der in der Backform hergestellten, gebackenen Formkörper bestimmen und die Backformen eine langgestreckte Backstrecke des Backofens durchlaufen, der eine Eingabestation mit einem horizontal verlaufenden Bahnabschnitt für die unteren Backplatten der Backformen vorgelagert ist, ***dadurch gekennzeichnet*, dass** in der Eingabestation (1) oberhalb der Bahn der unteren Backplatten (3) eine Teigstücke (13a,27) an vorgegebenen Stellen der Backflächen der unteren Backplatten (3) absetzende Absetzvorrichtung (9) vorgesehen ist, die mit den unteren Backplatten (3) vorübergehend mitbewegbar ist.

2. Vorrichtung nach Anspruch 1, ***dadurch gekennzeichnet*, dass** die Absetzvorrichtung (9) einen in Längsrichtung hin und her bewegbaren Schlitten (14) aufweist, der in Querrichtung nebeneinander angeordnete Auffangschalen (15) für die Teigstücke (13a, 27) trägt, welche mit den Backflächen der unteren Backplatten zugewandten, unteren Abgabeöffnungen (16) für die Teigstücke versehen sind.

3. Vorrichtung nach Anspruch 2, ***dadurch gekennzeichnet*, dass** jede Auffangschale (15) einen trichterförmigen Oberteil (25) und einen die Abgabeöffnung (16) umschließenden, hülsenförmigen Unterteil (26) besitzt.

4. Vorrichtung nach Anspruch 2, ***dadurch gekennzeichnet*, dass** der Schlitten (14) zumindest zwei in Längsrichtung hintereinander angeordnete Querreihen von Auffangschalen (15) trägt.

5. Vorrichtung nach Anspruch 2, ***dadurch gekennzeichnet*, dass** der Schlitten (14) eine Transportvorrichtung für die Auffangschalen (15) trägt, welche Transportvorrichtung eine auf dem Schlitten (14) in Querrichtung umlaufende, endlose Transportkette (21) besitzt, auf der die Auffangschalen (15) befestigt sind.

6. Vorrichtung nach Anspruch 5, ***dadurch gekennzeichnet*, dass** die Transportkette (21) zumindest zwei in Längsrichtung hintereinander angeordnete Querreihen von Auffangschalen (15) trägt, deren Auffangschalen (15) jeweils an einem in Querrichtung verlaufenden Abschnitt der Transportkette (21) befestigt sind.

7. Vorrichtung nach Anspruch 5, ***dadurch gekennzeichnet*, dass** der Schlitten (14) einen in Querrichtung über die Bahn der unteren Backplatten (3) seitlich vorstehenden Randabschnitt besitzt, der eine an der Umlaufbahn der Transportkette (21) angeordnete, mit einer Reinigungsvorrichtung (23) für die Auffangschalen (15) versehene Reinigungsstation (22) für die Auffangschalen (15) trägt.

8. Vorrichtung nach Anspruch 5, ***dadurch gekennzeichnet*, dass** die Umlaufbahn der die Auffangschalen (15) tragenden Transportkette (21) einen in Querrichtung über die Bahn der unteren Backplatten (3) seitlich vorstehenden Bahnabschnitt besitzt und seitlich neben der Bahn der unteren Backplatten (3) eine stationäre Reinigungsstation vorgesehen ist, die eine am Gestell des Backofens angebrachte Reinigungsvorrichtung für die Auffangschalen (15) umfasst.

## Claims

1. Charging device for introducing dough into baking moulds formed by top and bottom baking plates which traverse in a baking oven in the longitudinal direction thereof, the two baking plates of a baking mould determining with their baking surfaces facing one another the top and bottom sides of the baked shaped body produced in the baking mould, and the baking moulds passing through an elongated baking line of the baking oven, upstream of which baking line there is provided a feeding station having a horizontally extending path section for the bottom baking plates of the baking mould, ***characterised in that*** in the feeding station (1) above the path of the bottom baking plates (3) there is provided a depositing device (9) which deposits dough pieces (13a, 27) at predetermined positions on the baking surfaces of the bottom baking plates (3) and which is temporarily movable together with the bottom baking plates (3).

2. Device according to claim 1, ***characterised in that*** the depositing device (9) has a carriage (14) which is movable to and fro in the longitudinal direction and carries receiving cups (15) for the dough pieces (13a, 27), which receiving cups (15) are arranged next to one another in the transverse direction and are provided with bottom delivery openings (16) for the dough pieces facing the baking surfaces of the bottom baking plates.

3. Device according to claim 2, ***characterised in that*** each receiving cup (15) has a funnel-shaped upper portion (25) and a sleeve-like lower portion (26) surrounding the delivery opening (16).

4. Device according to claim 2, ***characterised in that*** the carriage (14) carries at least two transverse rows of receiving cups (15) arranged one behind the other in the longitudinal direction.

5. Device according to claim 2, ***characterised in that*** the carriage (14) carries a transport device for the receiving cups (15), which transport device has a continuous transport chain (21) which circulates on the carriage (14) in the transverse direction and to which the receiving cups (15) are secured.

6. Device according to claim 5, ***characterised in that*** the transport chain (21) carries at least two transverse rows of receiving cups (15) arranged one behind the other in the longitudinal direction, the receiving cups (15) of which are in each case secured to a section of the transport chain (21) extending in the transverse direction.

7. Device according to claim 5, ***characterised in that*** the carriage (14) has an edge portion which projects laterally in the transverse direction over the path of the bottom baking plates (3) and which carries a cleaning station (22) for the receiving cups (15) which is arranged in the path of the transport chain (21) and is provided with a cleaning device (23) for the receiving cups (15).

8. Device according to claim 5, ***characterised in that*** the path of the transport chain (21) carrying the receiving cups (15) has a path section that projects laterally in the transverse direction over the path of the bottom baking plates (3), and there is provided laterally, next to the path of the bottom baking plates (3), a stationary cleaning station which comprises a cleaning device for the receiving cups (15) which is attached to the frame of the baking oven.

## Revendications

1. Dispositif de chargement pour introduire de la pâte dans des moules de cuisson qui sont formés par des plaques de cuisson supérieures et inférieures, qui circulent dans un four de boulangerie, dans la direction longltudinale de ce dernier, dispositif dans lequel les deux plaques de cuisson d'un moule de cuisson déterminent par leurs faces de cuisson tournées l'une vers l'autre les côtés supérieurs et respectivement inférieurs des corps moulés cuits fabriqués dans le moule de cuisson, et les moules de cuisson traversent un trajet de cuisson allongé du four de cuisson, lequel trajet est précédé par un poste d'introduction possédant une partie horizontale du trajet pour les plaques de cuisson inférieures des moules de cuisson, **caractérisé en ce qu'**il est prévu au poste d'introduction (1), au dessus du trajet des plaques de cuisson inférieures (3), un dispositif de dépôt (9) qui dépose des morceaux de pâte (13a, 27) en des positions prédéterminées des faces de cuisson des plaques de cuisson inférieures (3), et qui est mobile passagèrement avec les plaques de cuisson inférieures (3).

2. Dispositif selon la revendication 1, **caractérisé en ce que** le dispositif de dépôt (9) comprend un chariot (14) mobile en va-et-vient dans la direction longitudinale, qui porte des coques réceptrices de morceaux de pâte (15) agencées côte à côte dans la direction transversale pour les morceaux de pâte (13a, 27), lesquelles sont munies d'ouvertures de transfert inférieures (16) pour les morceaux de pâte (13a, 27), tournées vers les faces de cuisson des plaques de cuisson inférieures (3).

3. Dispositif selon la revendication 2, **caractérisé en ce que** chaque coque réceptrice (15) possède une partie supérieure (25) en forme d'entonnoir, et une partie inférieure (26) en forme de manchon, entourant l'ouverture de transfert (16).

4. Dispositif selon la revendication 2, **caractérisé en ce que** le chariot (14) porte au moins deux rangées transversales de coques réceptrices (15) agencées l'une derrière l'autre en direction longitudinale.

5. Dispositif selon la revendication 2, **caractérisé en ce que** le chariot (14) porte un dispositif de transport pour les coques réceptrices (15), lequel dispositif de transport possède une chaîne transporteuse sans fin (21), circulant en direction transversale sur le chariot (14) et sur laquelle sont fixées les coques réceptrices (15).

6. Dispositif selon la revendication 5, **caractérisé en ce que** la chaîne transporteuse (21) porte au moins deux rangées transversales de coques réceptrices (15) agencées l'une derrière l'autre en direction longitudinale, dans chacune desquelles les coques réceptrices (15) sont fixées à une partie s'étendant en direction transversale de la chaîne transporteuse (21).

7. Dispositif selon la revendication 5, caractérisé en que le chariot (14) possède une partie de bord dépassant latéralement du trajet des plaques de cuisson inférieures (3), cette partie de bord portant un poste de nettoyage (22) pour les coques réceptrices (15), disposé sur le trajet de circulation de la chaîne transporteuse (21) et muni d'un dispositif de nettoyage (23) pour les coques réceptrices (15).

8. Dispositif selon la revendication 5, **caractérisé en ce que** le trajet de circulation de la chaîne transporteuse (21) portant les coques réceptrices (15) possède une partie de trajet dépassant latéralement en direction transversale au-delà du trajet des plaques de cuisson inférieures (3), et il est prévu un poste de nettoyage agencé fixement latéralement à côté du trajet des plaques de cuisson inférieures (3), ce poste comprenant pour les coques réceptrices (15) un dispositif de nettoyage monté sur le bâti du four de boulangerie.
